Europäisches Patentamt

European Patent Office

Office européen des brevets

(19)

(11) Publication number: **0 156 241 B1**

(12) **EUROPEAN PATENT SPECIFICATION**

(45) Date of publication of patent specification: **17.06.92**

(51) Int. Cl.5: **H01M 10/34**, H01M 4/38, H01M 6/18

(21) Application number: **85102820.9**

(22) Date of filing: **12.03.85**

(54) Solid-state electrolytic battery.

(30) Priority: **13.03.84 JP 49674/84**

(43) Date of publication of application:
**02.10.85 Bulletin 85/40**

(45) Publication of the grant of the patent:
**17.06.92 Bulletin 92/25**

(84) Designated Contracting States:
**DE FR GB IT**

(56) References cited:
DE-A- 2 755 797
DE-A- 3 110 571
FR-A- 2 390 021

SOLID STATE IONICS, vol. 6, no. 3, May 1982, pages 225-230, North-Holland Publishing Company, Amsterdam, NL; R.C.T.SLADE et al.: "NMR study of proton transport in the inorganic ion-exchange compounds SnO2.nH2O and TiO2.nH2O"

SOLID STATE IONICS, vol. 3/4, August 1981, pages 353-358, North-Holland Publishing Company, Amsterdam, NL; K.D.KREUER et al.: "Investigation of proton-conducting

solids"

(73) Proprietor: **SHARP KABUSHIKI KAISHA**
**22-22 Nagaike-cho Abeno-ku**
**Osaka 545(JP)**

(72) Inventor: **Mohri, Motoo**
**1537-333 Rokujyo-cho**
**Nara-shi Nara-ken(JP)**

(74) Representative: **TER MEER - MÜLLER - STEIN-**
**MEISTER & PARTNER**
**Mauerkircherstrasse 45**
**W-8000 München 80(DE)**

EP 0 156 241 B1

Rank Xerox (UK) Business Services

## Description

Background of the Invention

The present invention relates to a solid-state electrolytic battery composed of an activated solid-state cathode material, a solid-state electrolytic material, and an activated solid-state anode material.

As a result of the recent development of semiconductor element processing technology and the associated application technology, a variety of electronic apparatuses have helped to gradually decrease power consumption. At the same time, reflecting the tendency towards decreased power consumption, there is a growing demand to realize still smaller and thinner battery configurations for use in modern electronic apparatuses. There is also a strong demand to increase battery reliability. Solid-state electrolytic batteries show the promise of satisfying these requirements. Basically, the solid-state electrolytic battery uses a solid-state electrolyte containing an ionized conductive material. Thus, the electrolyte never leaks from the battery, so that even highly-automated semiconductor element processing technology can also be applied. This is a great advantage in realizing the mass production of solid-state electrolytic batteries. In fact, solid-state electrolytic batteries incorporating either an ionized silver conductive element, an ionized copper conductive element, or an ionized lithium conductive element have already been developed. Of these, the batteries using either an ionized silver conductive element or an ionized copper conductive element offer a relatively strong ionic conductivity in the solid-state electrolyte. Thus, a large amount of current can be discharged. Conversely, solid-state electrolytic batteries using an ionized lithium conductive element provide high density energy storage and allow a high voltage output. Nevertheless, since the solid-state electrolyte available for the ionized lithium conductive element is not sufficiently conductive, such batteries cannot discharge a large amount of current. In addition, since lithium itself absorbs a large amount of moisture, an extremely skilled technique is required to properly seal such batteries. This involves a complex production process while the battery itself requires a large volume as well. These disadvantages ultimately make it difficult to realize a smaller, thinner design which should be one of the advantageous features of solid-state electrolytic batteries. Solid-state electrolytic batteries containing either ionized silver, ionized copper, or ionized lithium electrolyte cause the conductive materials to precipitate themselves in branches as the charge is reduced. This adversely affects the services life and restricts the durable discharge. As a result, such obviously defective solid-state electrolytic batteries have not yet been marketed.

DE-A-2 755 797 discloses a hydrogen cation conducting composition preferably for the use as a separator for electrical devices for example in batteries and electrochromic cells. The battery system therein described is of a solid-state system comprising a $Cu/PdH_x/separator/ZrH_y/Cu$ or another system wherein the generating force for producing current is caused by the difference in the stability between the different metal hydrides.

## OBJECTS AND SUMMARY OF THE INVENTION

In light of the circumstances thus described, the present invention aims to realize a highly reliable and durable solid-state electrolytic battery incorporating a hydrogen-storing alloy. This battery should be capable of discharging a large amount of current and maintaining a very satisfactory charge/discharge cycle.

The invention relates to a solid-state electrolytic battery comprising a cathode made of an activated hydrogen-storing alloy, a solid-state electrolyte made of hydrogen-ion conductive elements and an anode containing hydrogen-ions as guest material, which is characterized in that
- the cathode (1) comprises as said activated hydrogen-storing alloy a hydrogenated Ti-Ni-, $LaNi_5$-, $CaNi_5$-, TiFe- or TiNiMn-alloy,
- the solid-state electrolyte (2) comprises phosphotungstate hydrate, stannic dioxide, antimony pentaoxide, uranyl phosphate, zirconium oxide or aluminosilicate, and
- the anode (3) comprises $TiS_2$, $TiS_3$, $NbS_2$, $NbS_3$, $MoO_2$, $WO_3$, $VS_2$, $CrO_2$, $Cr_3O_8$ or $MnO_2$.

It is well known that hydrogen in vapor form can be stored in a hydrogen-storing alloy at a specific temperature and pressure so as to co-exist with the alloy. The hydrogen-storing alloy storing the hydrogen in the hydrogenated metal can discharge hydrogen in vapor form by varying the temperature and pressure at specific levels. In addition, it has also been proposed to electrochemically apply the hydrogen-storing alloy to the cathode of an alkali battery having an alkaline solution as the electrolyte. The present invention provides an entirely new solid-state electrolytic battery incorporating a hydrogen-storing alloy as the cathode, a solid-state electrolyte activating protons as the conductive ion, and an anode comprised of a material containing hydrogen as a guest element. When the anode is composed of such a material that can reverse-feed hydrogen as guest material, the solid-state electrolytic battery embodied by the present invention can be repeatedly charged and discharged as required. Since the activated hydrogen-storing alloy is used in the cathode, the electrode causes the diffused hydrogen to take part in the reaction, thus effectively preventing the precipitation of the reduced conductive material in branches otherwise caused by repeated charge/discharge cycles when using conventional precipitation-type electrodes that apply a metallic ion for the conductive elements. Thus an extremely durable charge/discharge life results. The solid-state electrolytic battery of the present invention features the following advantages. Neither the hydrogen-storing alloy of the cathode nor the solid-state electrolyte nor the activated materials of the anode absorbs moisture, thus stabilizing the battery's atmosphere. Since all battery constituents are in solid-state, the battery can easily be sealed. Yet such solid-state electrolytes can be used to build extremely thin units or to create multiple layers, thus eventually providing a greater industrial potential than any conventional battery. The hydrogen-storing alloy for use as the cathode is comprised of hydrogenated alloys of $LaNi_5$, $CaNi_5$, TiFe, TiNi and TiNiMn.

Amorphous and/or crystalline material is used as the solid-state in terms of phosphotungstate hydrate ($P_2O_5 \cdot 24WO_3 \cdot 29H_2O$), stannic oxide ($SnO_2 \cdot nH_2O$), antimonypentaoxide ($Sb_2O_5 \cdot nH_2O$), uranyl phosphate ($HUO_2PO_4 \cdot 4H_2O$), zirconium oxide ($ZrO_2 \cdot nH_2O$) or aluminosilicate. In addition, to these, the following materials that accept hydrogen being suitable as anode materials may be used: $TiS_2$, $NbS_2$, $TiS_3$ $NbS_3$, $WO_3$, $Cr_3O_8$, $MnO_2$, $MoO_2$, $VS_2$, $CrO_2$. By adequately combining the variety of conditions needed for the cathode, electrolyte, and the anode, both the output voltage and the current can be controlled.

Brief Description of the drawings.

| | |
|---|---|
| Figure 1 | shows a simplified diagram of the solid-state electrolytic battery incorporating a preferred emdobiment of the present invention. |
| Figure 2 | illustrates the production process reflecting one of the preferred embodiments of the present invention. |
| Figures 3 and 4 | show the charge and discharge characteristics, respectively, of the solid-state electrolytic battery according to one of the preferred embodiments of the present invention. |
| Figures 5 and 6 | show the charge and discharge characteristics, respectively, of the solid-state electrolytic battery reflecting yet another embodiment of the present invention. |

Detailed Description of the Preferred Embodiments

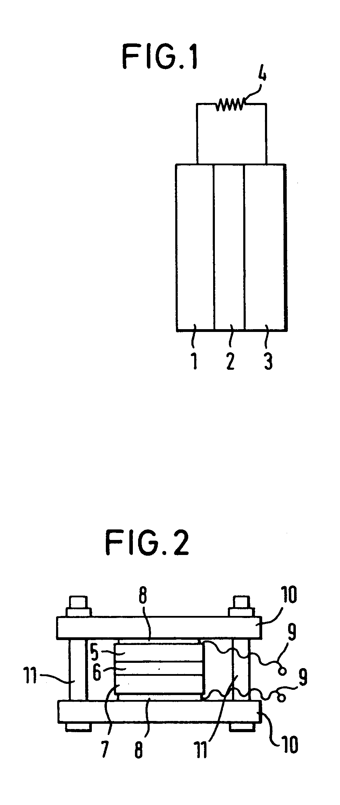

Figure 1 shows a simplified diagram of the solid-state electrolytic battery incorporating the preferred embodiment of the present invention. In Figure 1, reference number 1 indicates the cathode comprised of the hydrogen-storing material, 2 indicates the solid-state electrolyte provided with hydrogen-ionic conductivity and 3 indicates the anode comprised of a material capable of internally accommodating hydrogen as a guest material. The cathode 1 and the opposite anode 3 are connected through the conductive material 4 , thus causing the hydrogen stored in the hydrogen-storing material to start reacting in the manner indicated by the following formula so that hydrogen ions are released into the solid-state electrolyte.

$$Meta \cdot H_x \rightarrow Meta + xH^+ + xe^- \qquad (1)$$

wherein Meta denotes the hydrogen-storing material which, after imparting an electron to hydrogen, stores the hydrogen in a state very close to the anion.

The hydrogen ions released according to formula (1) proceed in the direction of the anode via the solid-state electrolyte. On arrival at the anode, the hydrogen ions cause the following reaction to occur, thus absoring hydrogen.

$$xH^+ + ABn + xe^- \rightarrow H_xABn \qquad (2)$$

wherein ABn represents the material that absorbs hydrogen as a guest material. Since ABn is electron-receptive, it absorbs hydrogen in a state very close to that of a cation. Actually, it is not yet very clear whether the hydrogen ion exists in the state of $H^+$ or as the hydronium ion $H_3O^+$ hydrated with water. Now, assuming that the conductive element is $H_3O^+$, the cathode will cause the following reaction to take place.

$$Meta \cdot H_x + xH_2O \rightarrow Meta + xH_3O^- + xe^- \qquad (1)'$$

whereas the anode will cause the following reaction:

$$xH_3O^+ + ABn + xe^- \rightarrow H_xABn + xH_2O \qquad (2)'$$

However, the present invention does not define whether such water hydrating said hydrogen ions is comprised of crystal water in the solid-state electrolyte or of free water contained in the solid-state electrolyte. The present invention also does not define whether such hydrogen absorbed as a guest material is perfectly topo-chemical, or whether it is accompanied by a structural variation of the host material or a state close to that of the compound. Even when the discharge reactions take place according to formulae (1) and (2) or (1)' and (2)', the battery's over-all reaction during discharge is as shown in the formula below:

$$Meta \cdot H_x + ABn \rightarrow H_xABn + Meta.$$

Note that the reverse reaction takes place during charge.

A typical procedure for manufacturing the hydrogen-storing alloy is described below. First, titanium having a purity of at least 99.5% and nickel having a purity of at least 99.5% are blended in an atomic ratio of 1:1. Then, this blend is inserted into an arc furnace wherein a vacuum of $1.3 \cdot 10^{-4}$ to $1.3 \cdot 10^{-5}$ mbar ($10^{-4}$ or $10^{-5}$ Torr) is created. Then an argon gas atmosphere is produced whereafter the blend is molten in the arc furnace to dissolve the components. The blend is agitated several times to obtain a homogenous blend. The dissolution is repeated several times to make up the alloy. After completing the dissolution the specimen is extracted and crushed to pieces having a diameter of several millimeters. These pieces are introduced into a high-pressure stainless steel container and the air is extracted to create a vacuum of $1.3 \cdot 10^{-2}$ mbar ($10^{-2}$ Torr). Then hydrogen gas is introduced into the container to raise the pressure up to 30 bars, whereafter the contents is heated up to 250°C. Then, the material is left for about 2 hours before cooling it to room temperature. The hydrogen gas is released and the container is again evacuated. Again hydrogen gas is fed into the container up to a pressure of 30 bar, thereby to cause the TiNi-alloy to absorb hydrogen. This completes the hydrogenation of the TiNi-alloy. If the test result is unsatisfactory, the entire procedure described above is repeated. Next, using an agate mortar, the hydrogenated TiNi-alloy is crushed in a glove-box comprising an argon gas atmosphere to obtain crushed powder particles having a diameter of less than 44 microns. To 0.1 gram of said particles, 0.01 gram of conductive carbon are added. Finally, pellets are formed using a pelletizer.

Next, 99.99% pure antimony pentaoxide is mixed with pure water and stirred well. The mixture is dried at room temperature. 0.1 gram of the dried powder is formed to pellets using the pelletizer. If the mixture of antimony pentaoxide and water still does not provide proton conductivity, antimony pentachloride is introduced into pure water to generate a white precipitate, which is rinsed, dried and used. Next, manganese dioxide is prepared in the conventional manner and crushed to obtain a powder. 0.01 gram of the conductive carbon powder is then added to 0.1 gram of the crushed powder obtained. Finally, pellets are formed using the pelletizer.

To provide the solid-state electrolytic battery a cathode composed of $TiNiH_x$, a solid electrolyte of $Sb_2O_5 \cdot nH_2O$, and an anode of $MnO_2$ are connected to each other using lead terminals made of platinum plate and platinum wire, and are then slightly pressed using a laminated plastic plate called "Bakelite" and nuts or bolts. Thereafter the battery is repeatedly charged and discharged. This configuration is shown in Figure 2. Reference number 5 indicates the cathode, 6 the solid-state electrolyte, 7 the anode, 8 the platinum-plates, 9 the platinum lead wires, 10 the laminated plastic plates, and 11 the nuts and bolts. Finally, the battery is sealed with an epoxy resin or a similar sealing material.

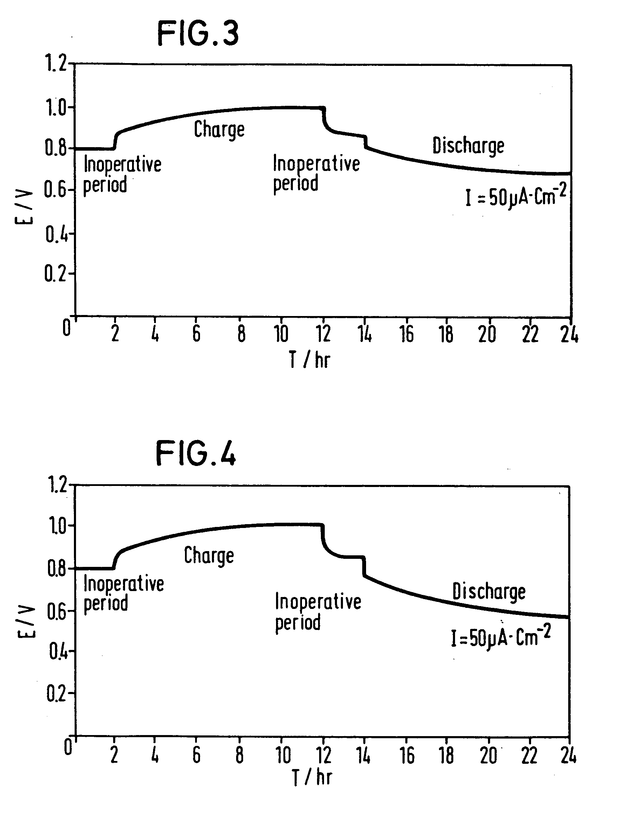

Figure 3 shows the first charge/discharge cycle characteristics, whereas figure 4 shows the 50th charge/discharge cycle characteristics. By these tests, it is confirmed that the solid-state electrolytic battery according to the present invention can be repeatedly charged and discharged. Likewise, when using as the activated anode materials $WO_3$ or $TiS_2$, the same satisfactory results as above were obtained.

When such unique solid-state electrolytic batteries are completed, they are provided with a specific range of open-potentials according to the amount of moisture stored in the activated anode material as the structural content, the blended amount of the conductive materials, and the hydrogen content stored in the activated cathode materials. For example, after testing a number of these solid-state electrolytic batteries composed of $TiNiH_x$/carbon $Sb_2O_5 \cdot nH_2O$, and $MnO_2$/carbon, respectively, each of these batteries actually yielded an open potential of 860 mV to maximum of 1.250 mV as is shown in Table 1 below.

Table 1

| Open-potentials actually yielded by the solid-state electrolytic batteries incorporating the anode containing hydrogen as a guest material and the cathode comprised of the hydrogen-storing alloy (at 25°C). | | |
|---|---|---|
| Anode | Cathode | Open-potential (mV) |
| $MnO_2$ | $TiNiH_x$ (x = 0.7) | 860 |
| $WO_3$ | $TiNiH_x$ (x = 1.2) | 460 |
| $TiS_2$ | $TiNiH_x$ (x = 1.2) | 380 |
| $MnO_2$ | $TiNiH_x$ (x = 1.3) | 1,200 |
| $NbS_2$ | $TiNiH_x$ (x = 1.2) | 280 |
| $VS_2$ | $TiNiH_x$ (x = 1.2) | 290 |
| $MoO_2$ | $TiNiH_x$ (x = 1.2) | 370 |
| $CrO_2$ | $TiNiH_x$ (x = 1.2) | 1,040 |
| $MnO_2$ | $LaNi_5H_x$ (x = 1.0) | 1,210 |
| $MnO_2$ | $CaNi_5H_x$ (x = 3.0) | 1,150 |
| $MnO_2$ | $TiNiMn_{0.007}H_x$ (x = 1.3) | 1,210 |
| $MnO_2$ | $TiNiMn_{0.01}H_x$ (x = 1.3) | 1,250 |

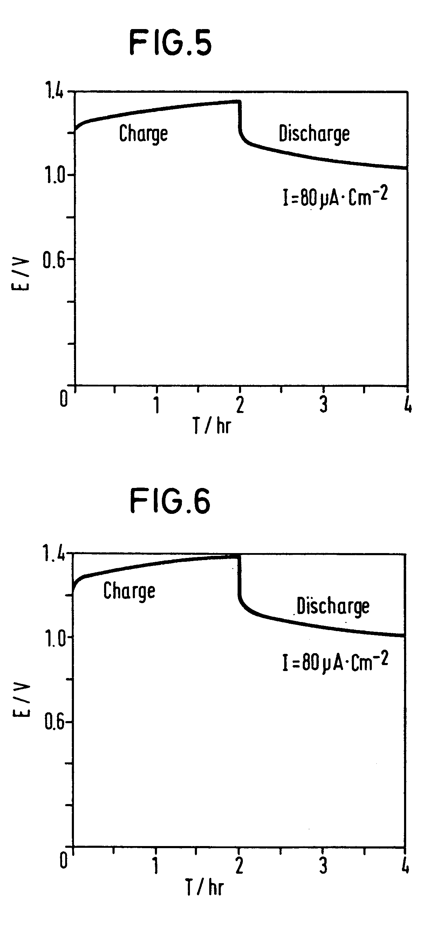

According to a still further preferred embodiment of the present invention, special batteries are manufactured which contain anodes made of $MnO_2$, cathodes made of $TiNiMn_{0.007}H_{1.4}$, and an electrolyte made of $Sb_2O_5 \cdot 5.5H_2O$. In addition, $Sb_2O_5 \cdot 5.5H_2O$ and acetylene carbon black were blended into the anode and cathode material, respectively. The charge/discharge characteristics of these batteries are shown in Figures 5 and 6, respectively. Figure 5 shows the charge/discharge characteristics measured during the first cycle at 25°C, whereas Figure 6 shows these characteristics measured during the 100th cycle at 25°C.

As is clear from the above description, the unique solid-state electrolytic battery embodied by the present invention effectively uses an activated hydrogen-storing alloy for the cathode, a solid-state hydrogen-ion conductive electrolyte, and anode materials, that absorb hydrogen as a guest. This battery has proven to be significantly useful in providing great potential advantages for all industries today.

## Claims

1. A solid-state electrolytic battery comprising a cathode made of an activated hydrogen-storing alloy, a solid-state electrolyte made of hydrogen-ion conductive elements and an anode containing hydrogen-ions as guest material,

   **characterized in that**

   - the cathode (1) comprises as said activated hydrogen-storing alloy a hydrogenated TiNi-, LaNi$_5$-, CaNi$_5$-, TiFe- or TiNiMn-alloy,
   - the solid-state electrolyte (2) comprises phosphotungstate hydrate, stannic dioxide, antimony pentaoxide, uranyl phosphate, zirconium oxide or aluminosilicate, and
   - the anode (3) comprises $TiS_2$, $TiS_3$, $NbS_2$, $NbS_3$, $MoO_2$, $WO_3$, $VS_2$, $CrO_2$, $Cr_3O_8$ or $MnO_2$.

## Revendications

1. Batterie à électrolyte solide, comprenant une cathode en un alliage de stockage d'hydrogène activé, un électrolyte solide constitué d'éléments conducteurs de l'ion hydrogène et une anode contenant des ions hydrogène en tant que matière-hôte,

   caractérisée en ce que :

   - la cathode (1) comprend, en tant qu'alliage de stockage d'hydrogène activé, un alliage Ti-Ni, LaNi$_5$, CaNi$_5$, TiFe ou TiNiMn hydrogéné,
   - l'électrolyte solide (2) comprend un hydrate de phosphotungstate, de l'oxyde stannique, du pentaoxyde d'antimoine, du phosphate d'uranyle, de l'oxyde de zirconium ou un aluminosilicate et
   - l'anode (3) comprend du $TiS_2$, du $TiS_3$, du $NbS_2$, du $NbS_3$, du $MoO_2$, du $WO_3$, du $VS_2$, du $CrO_2$, du $Cr_3O_8$ ou du $MnO_2$.

## Patentansprüche

1. Elektrolytische Feststoffbatterie mit einer Kathode aus einer aktivierten Wasserstoff speichernden Legierung, einem Feststoff-Elektrolyt aus Wasserstoffionen-leitendenElementen und einer Wasserstoffionen als Gastmaterial enthaltenden Anode, **dadurch gekennzeichnet**, daß

   - die Kathode (1) als aktivierten Wasserstoff speichernde Legierung eine hydrierte TiNi-, LaNi$_5$-, CaNi$_5$-, TiFe- oder TiNiMn-Legierung umfaßt,
   - der Feststoff-Elektrolyt (2) Phosphotungstat-hydrat. Zinn(IV)-dioxid, Anitmonpentaoxid, Uranylphosphat, Zirkoniumoxid oder Aluminosilikat umfaßt und
   - die Anode (3) $TiS_2$, $TiS_3$, $NbS_2$, $NbS_3$, $MoO_2$, $WO_3$, $VS_2$, $CrO_2$, $Cr_3O_8$ oder $MnO_2$ umfaßt.

# FIG.1

# FIG.2

## FIG.3

## FIG.4

## FIG.5

Charge    Discharge

$I = 80 \mu A \cdot Cm^{-2}$

E/V

T / hr

## FIG.6

Charge    Discharge

$I = 80 \mu A \cdot Cm^{-2}$

E/V

T / hr